(19) 

Europäisches
Patentamt
European
Patent Office
Office européen
des brevets

(11) **EP 4 254 226 A1**

(12) **EUROPEAN PATENT APPLICATION**

(43) Date of publication:
**04.10.2023 Bulletin 2023/40**

(51) International Patent Classification (IPC):
**G06F 17/11** (2006.01) **G06N 10/00** (2022.01)

(21) Application number: **22164734.0**

(52) Cooperative Patent Classification (CPC):
**G06F 17/11; G06N 5/01; G06N 7/01**

(22) Date of filing: **28.03.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Microsoft Technology Licensing, LLC
Redmond, WA 98052-6399 (US)**

(72) Inventors:
• **GKANTSIDIS, Christos
Redmond, 98052-6399 (US)**
• **PARMIGIANI, Francesca
Redmond, 98052-6399 (US)**
• **KALININ, Kirill
Redmond, 98052-6399 (US)**
• **ROWSTRON, Antony Ian Taylor
Redmond, 98052-6399 (US)**
• **BALLANI, Hitesh
Redmond, 98052-6399 (US)**
• **LYUTSAREV, Vasily
Redmond, 98052-6399 (US)**

(74) Representative: **Page White Farrer
Bedford House
21a John Street
London WC1N 2BF (GB)**

(54) **SYSTEM OPTIMISATION METHODS**

(57)    A computer-implemented method comprising receiving a plural number of candidate parameter value sets in a specified order, each comprising a respective candidate parameter value for at least one parameter of an optimisation algorithm, wherein the number of candidate parameter value sets is based on a processing budget; for each candidate parameter value set in the sequence: applying the optimisation algorithm, with the at least one parameter set to the respective candidate parameter value, to a plurality of initial states of a model representing a system to generate corresponding candidate updated states, and evaluating each of the candidate updated states according to an optimality metric to generate a corresponding optimality score; selecting, as an estimated optimal state of the model, the candidate updated state having the highest optimality score; and outputting the selected estimated optimal state of the model to a user interface, network interface or other application.

FIG. 1

**Description**

Background

Combinatorial optimisation problems are a group of problems with a wide variety of applications, including resource scheduling, capacity planning, drug discovery and constructing low density parity check codes for 5G technology.

Many combinatorial optimisation problems are solved by representing the problem as an Ising model. The Ising model is formulated as the minimisation of a quadratic function:

$$\min\left(-\sum_{i>j} G_{ij} s_i s_j\right), \qquad (1)$$

where $s_i$ are variables, typically referred to as spins, taking binary values $\pm 1$, and $G_{ij}$ are elements of a matrix **G**, typically referred to as interactions between the spins. The solution to the Ising model is the assignment of binary values to the variables $s_i$ that minimises the above expression. This model can be used to find approximate solutions to real-world optimisation problems by mapping the variables interactions and goal of the real world problem to an Ising model definition such that minimising the energy of the Ising model is equivalent to optimising the goal of the real system. The Ising problem can be alternatively formulated as the quadratic unconstrained binary optimisation problem (QUBO), or, when $G_{ij}$ defines edges of a graph between nodes $s_i$, solving the Ising problem is equivalent to finding the maximum cut of the graph $G_{ij}$.

Many existing solvers applied to combinatorial optimisation use a technique known as simulated annealing to determine an optimal state. Simulated annealing works by moving between random neighbouring states based on the energy at those states, with some randomness, until an estimated optimal state is reached.

Some existing Ising solvers use a standard gradient descent updated scheme to update the state of the Ising model towards a minimal energy using a gradient of the energy function, with hyperparameters of the algorithm being determined using hyperparameter optimisation packages.

Summary

Existing solvers for combinatorial optimisation problems generally use external hyperparameter optimisation methods to determine a best set of parameters of the optimisation algorithm used to generate an optimal state. Described herein are techniques to determine an approximately optimal solution to such an optimisation problem, given an optimisation algorithm taking a set of parameters, by processing a plurality of different parameter value sets, generating a set of updated states as candidate solutions and selecting an overall optimal solution from the set of candidates. The methods disclosed herein provide an efficient and flexible optimisation method by implementing the optimisation algorithm with multiple different parameter value sets. Evaluation of the results of multiple parameterisations of the optimisation algorithm is useful in order to find a state that is close to optimal. The number of parameter value sets used in the optimisation algorithm is dependent on a processing budget. For a given processing budget, the present invention outputs an estimated optimal state of the system being modelled by evaluating candidate states generated in an application of the optimisation algorithm for different parameter value sets, with the application of the optimisation algorithm defined so as to stay within the processing budget. This balances the advantage of implementing different parameter value sets for finding candidate optimal states with efficiency required to stay within a budget on processing time, energy consumption or other limits on compute resources.

The number of parameter value sets is dependent on a processing budget of the computer on which the optimisation algorithm is implemented. As described below, this computer may be a conventional electronic-digital computer comprising processors and memory, or an optical computer comprising light sources and optical hardware components such as photodetectors, lenses and diffraction elements. The processing budget may be based on any of a processing time, an energy consumption of the computer, a memory usage of the computer, a number of individual operations performed by the computer, or any other resource used by the computer during processing.

Note that in the below description, reference is made to estimated and approximated optimal solutions. This is because the methods described herein aim to find an optimal solution to the given problem but do not guarantee that a global optimum is found. These solutions therefore may be globally sub-optimal but provide a best solution available within the constraints of compute resources and time. Any reference herein to an optimal solution arising from the methods described herein should be interpreted as an approximate or estimated optimal solution.

More generally according to one aspect disclosed herein, there is provided a computer-implemented method comprising:_receiving a plural number of candidate parameter value sets of an ordered sequence of candidate parameter value sets in an order specified in the ordered sequence, each of said plural number of candidate parameter value sets comprising a respective candidate parameter value for at least one parameter of an optimisation algorithm, wherein the number of received candidate parameter value sets is based on a processing budget;_for each candidate parameter value set in the sequence: applying the optimisation algorithm, with the at least one parameter of the optimisation algorithm set to the respective candidate parameter value, to a plurality of initial states of a model representing a system in order to generate a corresponding plurality of candidate updated states of the model, and_evaluating the plurality of candidate updated states according to an optimality metric, the evaluating comprising evaluating each of the candidate updated states according to the optimality metric to generate a corresponding optimality score for the candidate updated state, such that different ones of the candidate updated states have different optimality scores; selecting, as an estimated optimal state of the model, the candidate updated state that has the highest corresponding optimality score; and_outputting the selected estimated optimal state of the model to one of: a user interface, a network interface, computer storage, or a destination application.

The parameter value sets may be received from an application for generating parameter value sets, received from a network interface, received from a device external to the computer system performing the optimisation, or retrieved from storage, for example from a database or other data structure held in computer memory, or received from a user. The candidate parameter value sets are received in order. The received candidate parameter value sets may be selected as a subset of the first k parameter value sets of a sorted list of parameter value sets, where k is a predefined number or is a dynamically chosen number based on the processing budget. Alternatively, the received parameter value sets may be randomly generated.

The system may be represented by a graph defining interactions between pairs of variables of the system, wherein a state of the system is an assignment of binary values to the variables of the system. The model may be an Ising model.

The optimisation algorithm may be a gradient descent algorithm. The gradient descent algorithm may use one of standard momentum or Nesterov momentum. The gradient descent algorithm may alternatively or additionally use an adaptive moment estimation.

The system represented by the model may be one of a computing system, electronic system or mechanical system, wherein the method further comprises implementing the estimated optimal state in the system. In some embodiments, for the application of drug design, the system represented by the model may be a family of compounds or molecular scaffold defining an underlying structure, where a finite number of combinations of molecules can be assigned to particular positions within the underlying structure. The system may be a set of a plurality of computing resources for implementing a set of processes, wherein the states are allocations of processes to respective computing resources of the plurality of computing resources.

The methods disclosed herein are implemented in a computer. The computer may be a conventional digital computer comprising memory and one or more computer processors that perform the methods described herein by executing instructions. In this case, the optimisation algorithms described herein may be provided as software, which is interpreted by the computer to generate a set of machine code instructions which are executed in conventional computer hardware. Alternatively, the computer may be an optical computer comprising optical hardware for implementing the steps of the algorithms described herein. Optical computers do not necessarily operate by executing instructions as a conventional computer does, but implements arithmetic and logical operations using optical components such as lasers, photodetectors, modulators, etc. In an optical computer, variables are modelled by light signals generated for example by lasers or other light sources, wherein an optimisation algorithm is implemented by interacting the light signals using one or more optical hardware components, such as photodetectors, lenses and diffraction gratings, to generate a set of optical signals representing an approximately optimal state of the system being modelled.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

Brief Description of the Drawings

To assist understanding of the present disclosure and to show how embodiments may be put into effect, reference is made by way of example to the accompanying drawings in which:

Figure 1 is a schematic block diagram of an algorithm for finding an optimal state of a modelled system,
Figure 2 is a flow chart showing the steps of an algorithm for optimising the state of a model,
Figure 3 is a schematic block diagram showing an implementation of the optimisation algorithm within a multi-step optimisation architecture,

Figure 4A shows an example scheme for searching a two-dimensional parameter space,

Figure 4B shows the division of the parameter space into regions based on observed performance against a performance metric,

Figure 5A shows a schematic block diagram of an optical hardware implementation of the optimisation method,

Figure 5B shows a schematic block diagram of an optical hardware implementation of an example optimisation algorithm, and

Figure 6 shows an example wavelength-selective switch configuration for performing optical vector-by-matrix multiplication.

Detailed Description of Embodiments

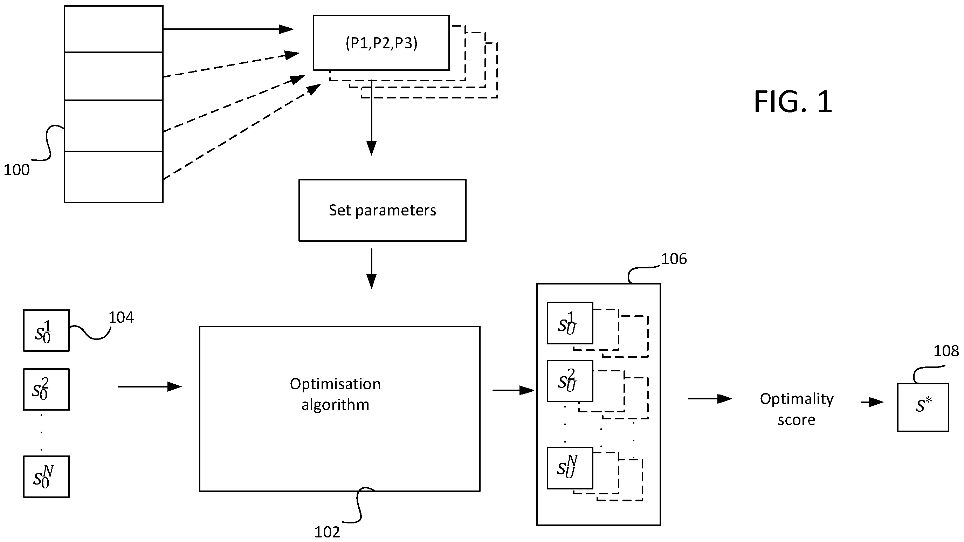

Figure 1 shows a schematic bock diagram of a method used to find an optimal state of a model for a real-world system. The system can take on a large number of possible states, where the optimal state is the state that provides the best performance in terms of some characteristic of the system, such as the state with the lowest energy. In some embodiments, the model comprises a graph or matrix representing the interactions between multiple variables of the system, with a given state s being an assignment of values to the set of variables of the system. In some examples, the variables are binary, taking values 1 and -1, or alternatively 1 and 0. The examples described herein refer mainly to binary variables but the methods disclosed herein may also be applied to states with variables taking any discrete values. Continuous variables may also be optimised according to the methods described herein, as mentioned later.

The algorithm works to apply multiple possible parameterisations of a predefined optimisation algorithm to multiple initial states of the system to generate a set of candidate updated states as possible solutions to the optimisation problem. The optimisation algorithm updates the initial state to generate a candidate state. An optimality score is computed by applying an optimality metric as a measure of the candidate states. This may be, for example, an energy function, as described later, representing an energy of a physical system, or some other metric representing the goal of the given optimisation problem. For example, where the problem is an allocation of computing tasks to compute resources, the optimality score may be dependent on the time taken to perform all tasks, or a similar measure. Similarly, for drug discovery, the optimality score may be dependent on a measure of toxicity and/or effectiveness of candidate compounds represented by the candidate states. In this case, the optimality metric is defined so as to assign a high optimality score to candidate compounds with low toxicity and high effectiveness. The optimality metric may be a function of multiple factors on which the optimal state is dependent. The optimality metric is applied to each candidate state to generate an optimality score for that state. The state with the highest optimality score can then be selected as the estimated optimal state. 'Optimality metric' is used herein to refer to the function applied to the state to measure the optimality of the state for the given optimisation, while 'optimality score' is used to refer to the value obtained when the optimality metric is applied to a given state.

The method may be applied to determine an approximately optimal state for a real-world system. This could be an electronic system, such as a set of computer processors for which a set of processes are to be assigned in an optimal way, where in this case, the optimality metric is a measure of the overall use of computing resources to handle the processes.

Another possible real-world application of the methods described herein is in the process of drug discovery. In this case, the system may be a structure or scaffold defining a type of molecule that is desired to test and synthesise for the purpose of developing a drug, where the scaffold provides a set of possible positions in which to place each of a finite set of atoms and/or molecules. For this problem definition, a state of the system is represented by an assignment of an element or compound to each position of the scaffold. The optimality of the solution can be assessed by defining an optimality metric that is maximised for desirable properties of a drug, such as effectiveness for the desired function of the drug, ease of manufacturing, etc., and minimised for undesirable properties such as toxicity. In this case, the state may comprise a set of binary variables $x_{R_i,j}$, which are indexed by position $R_i$ and compound $j$ such that the variable has a value 1 when the compound $j$ is placed in position $R_i$ and 0 otherwise. In addition to the optimal properties of the drug mentioned above, the optimality metric (which is based on the objective function to be maximised) is defined such that no two compounds can be assigned to the same position by penalising such states by a heavy penalty term. The optimality metric and optimisation algorithm are selected according to the requirements of an optimal state for the given drug design problem. For example, where it is desirable that the drug has a low total weight, a term may be added to the optimality metric:

$$F(x) = -M \cdot \sum_j w_j x_{R_1,j} + \cdots$$

where $w_j$ is the weight of the compound $j$ in position $R_1$, where additional terms relating to the other positions are not written above but are also included in the function F. The above term is maximised when the weight $w_j$ is low, as desired. A skilled person in the field of optimisation is familiar with how to define terms like the one shown above to penalise or encourage particular behaviour for properties of the system, and these will not be described in further detail herein.

The method is applied by processing an ordered sequence 100 of parameter value sets in the given order. The ordered sequence, as described in more detail later by way of example with respect to specific embodiments of the present invention, may be selected as a subset from a sorted list of parameters. The sorted list may, for example, be generated from a predetermined range for each parameter based on an expected performance of the optimisation algorithm for those parameters. The expected performance may be measured by performing a search of a parameter space and applying a modified optimisation algorithm with each set of parameter values of the searched parameters to a set of exploratory initial states of the system, and measuring a performance metric over the optimality score of the updated states generated by the modified optimisation algorithm. The performance metric is a representative measure of the optimality score over the set of the exploratory updated states for the given set of parameter values. Examples of performance metrics include a mean, median, minimum or maximum of the optimality score aggregated over all the exploratory updated states. For example, the performance metric may be a mean, median, minimum energy of the set of exploratory states, where the energy of the system in a given state is used as an optimality metric determining the optimality score (where energy is inversely related to optimality). The performance metric can also be any other statistical metric of the optimality score, or any other metric that relates to the optimality score such that the performance metric represents an expected performance of the optimisation function with that set of parameter values.

The parameter search may be performed by applying Bayesian methods. Alternatively, a grid search over a region of parameter space may be performed to generate the set of parameters to be processed in the exploratory phase. In another alternative, the parameters to be processed may be generated randomly.

The sequence may be fully determined before processing begins, or the sequence to be processed may be a subset of a longer list, where the sequence actually processed is determined from the sorted list based on a processing budget, i.e. the resources available for processing, and the sequence is complete once this budget is reached.

Where the system is represented by a matrix, the range to be explored for each parameter may be determined using linear stability analysis on an eigenvalue of the matrix, as described in more detail later. Alternatively, the range may be initialised manually and dynamically updated based on the optimality score computed for the updated states in the exploration phase.

The number of processed candidate parameter value sets is the number that can be processed within the processing budget. The processing budget is defined in terms of one or more of: a processing time, a number of processing cycles, an amount of memory resource consumed, and/or an energy consumption. For example in embodiments the processing budget may comprise a limit on a processing time, the number of processed candidate parameter value sets being the number that can be processed within the processing time limit. In further alternative embodiments, the processing budget may comprise a limit on an amount of memory resource consumed, the number of processed candidate parameter value sets being the number that can be processed within that limit on memory. In further embodiments, the processing budget may comprise a limit on a number of processing cycles performed, the number of processed candidate parameter value sets being the number that can be processed within the limited number of processing cycles. Alternatively in embodiments the processing budget may comprise a limit on a processing energy consumption, the number of processed candidate parameter value sets being the number that can be processed within the limit on energy consumption. In further embodiments, the processing budget may comprise a constraint on two or more such factors. E.g. the processing may stop as soon as either of two or more (e.g. the time limit or the energy consumption), or the constraint may be defined in terms of a combined metric combining two or more factors.

Each parameter value set of the sequence contains values to parameterise the optimisation algorithm 102. In some embodiments, the optimisation algorithm takes two parameters, and each item in the sequence is a pair of values corresponding to these parameters. Other optimisation algorithms take three values, and the sequence is a sequence of triplets. This example is shown in Figure 1, where each parameter value set is shown as a 3-tuple ($P1, P2, P3$).

The optimisation algorithm may be an iterative algorithm that updates the state of the system from an initial state over a predetermined number of iterations by repeatedly applying an update rule. Some such optimisation algorithms apply iterative gradient descent updates over a predetermined number of iterations, where the gradient function is parameterised by two parameters. Other example algorithms use gradient descent with a momentum term parameterised by a third momentum parameter $\gamma$. These examples will be described in more detail later. The modified optimisation algorithm used in generating the sorted list may be the same iterative algorithm implemented over a smaller number of iterations. Gradient descent methods use the gradient of a function to determine a direction of an update towards a local minimum, where the gradient is a vector of first-order partial derivatives of the function with respect to each of its variables. Other possible iterative optimisation algorithms may use higher-order derivatives in order to determine the direction of the update.

Non-derivative-based (or derivative-free) methods may also be used. For example, as mentioned above, simulated annealing is a common algorithm applied for solving combinatorial optimisation problems. Another family of optimisation algorithms that may be used to solve such optimisation problems is evolutionary algorithms. These algorithms include particle swarm optimisation and genetic algorithms. These techniques are well-known in the field of optimisation and will not be discussed in detail herein. The methods described herein for optimising a system can be used in conjunction with any of these optimisation methods. In other words, a procedure may be applied where for any of the mentioned optimisation algorithms, an ordered list of parameter value sets defining the optimisation algorithm can be processed in the given order and the respective optimisation algorithm can be applied to initial states of the system in order to generate candidate solutions.

Each set of values is selected in the defined order, and the optimisation algorithm parameters are set to the respective values $P1, P2, \ldots$ for the given set. The optimisation algorithm is applied to a plurality of initial states 104 of the system, the initial state $S_0^1$ representing the first initial state and the initial state $S_0^N$ representing the $N^{th}$ initial state. This generates a set of $N$ updated states $S_U^1, \ldots, S_U^N$. This process is repeated for each parameter value set, until a full set 106 of candidate updated states is generated. The initial states may be generated randomly for each set of parameter values. Alternatively, a single set of initial states may be generated and re-used with each parameter value set. It is noted that for an implementation of the described techniques in software, it is computationally efficient to generate a single set of initial states and re-use them for each parameter value set, while for an optimisation algorithm implemented in optical hardware, the initial states of the system, which can be modelled as an intensity or phase of a set of one or more light signals, as described in more detail later, may be different for each parameter value set. When setting initial states in optical hardware, one option is to set all states to initial values having all zeroes. Alternatively, a random initialisation may be applied, wherein random states are generated initially in the digital domain, and these are passed to a spin generator to generate modulated light signals representing these random initial states. Having different randomly-sampled initial states allows wider coverage of the solution space that is being searched. More sophisticated sampling strategies may be used to provide a set of initial states to which the optimisation algorithm is applied. For example, some strategies use centrality measures for the given problem to identify the relative importance of the variables. Common centrality measures include the betweenness, degree, PageRank and others. These measures are defined with respect to nodes of a graph, which is one possible representation for the variables of a combinatorial optimisation problem. The selection of initial states may then be carried out such that the direction of the most important nodes (i.e. variables) is fixed.

The optimisation algorithm is defined so as to update the state of the system in the direction of an optimal solution according to some goal or objective of the optimisation problem represented by an optimality score, for example by minimising an energy function representing a total energy of a system, where the optimal state is the lowest energy state of the system.

Once a set of candidate updated states 106 is generated, an optimality metric is applied to each candidate state, which may represent an energy of a physical system, or some other optimisation measure. The highest scoring state $s^*$ according to the given optimality metric is selected as the estimated optimal state of the system. The optimality metric may be defined in terms of some cost function or objective function representing the goal of optimising of the given system.

The estimated optimal state of the system is then output. The state may be output to a user via a user interface, such as a graphical user interface for display on a screen, or as an audible output. Alternatively the state may be output directly to another system or application to use directly in the configuration of a system state, for example by passing the state to a computer-aided design tool or to a controller of a real-world system capable of interpreting the output state and implementing it in the system. The estimated optimal state may also be output to a device external to the computer system performing the optimisation, or to a network interface. In other embodiments, the state is output to computer storage, which may be temporary (such as RAM) or non-volatile storage (such as a hard disk drive, disk storage, etc.), where it may be accessed by a user or by a computer application, such as a modelling tool or controlling application of a system.

The modelled system may be a real-world system. The real-world system may be any of: a computing system, electronic system, electrical or electromagnetic system, mechanical system, chemical system, or an application of a treatment to a living being, or any other real-world system representable as a combinatorial optimisation problem. The estimated optimal state output by the optimisation algorithm as described above may be implemented by making, building or programming the state in the real-world system, or by modifying an existing state of the system by a physical, chemical, mechanical or electrical process. A user may directly effect an estimated optimal state in the system, for example by moving, modifying or building components of a physical system. Alternatively a user may provide inputs to a computer application or other tool to action the state in the system, for example by configuring a computer-aided design tool and/or manufacturing device to create the optimal system state or modify an existing state to the optimal state. Similarly, a computer application, such as a computer-aided design or modelling application may receive the estimated optimal state and control a manufacturing device or other machinery to effect that state in a real-world system, which may be a physical, chemical, mechanical or electrical system. As mentioned above, combinatorial optimisation problems have a wide range of real-world applications, including resource scheduling, constructing low-density parity check codes for 5g, and drug discovery, among other applications which will be known to a skilled person in the field of optimisation methods.

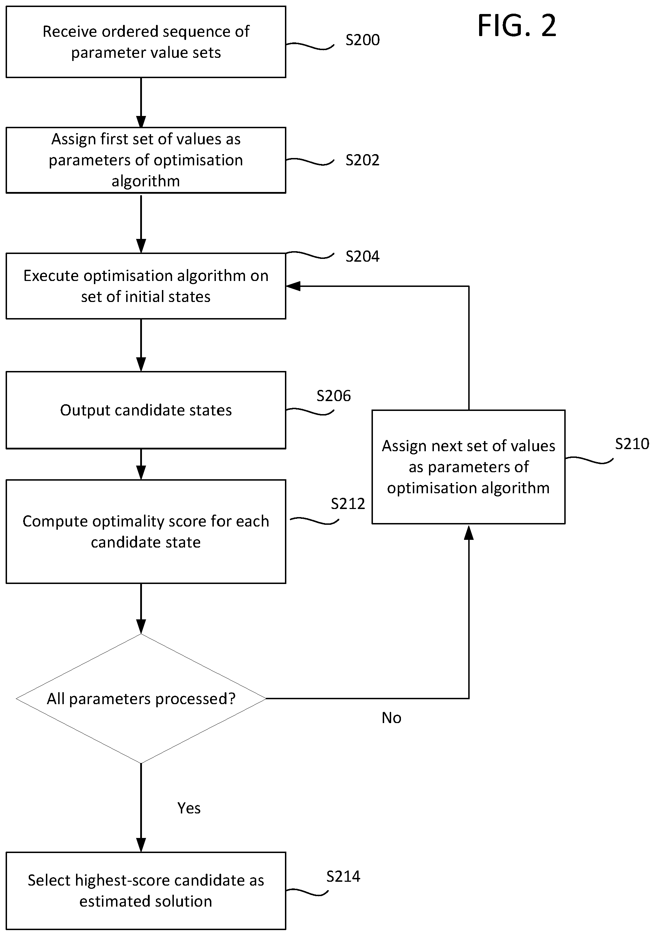

Figure 2 shows a flowchart of the method shown in Figure 1. At step S200, the ordered sequence of parameter value sets is received. The first set of values in this sequence is assigned to the parameters of the optimisation algorithm at step S202. At step S204, the optimisation algorithm is executed with the given parameter values on a plurality of initial states to generate a set of candidate updated states at step S206. These are added to an overall set of candidate states 106 as described with reference to Figure 1. An optimality score is computed for each candidate updated state using an optimality metric at step S212. As mentioned above, the optimality metric is a measure of the given state as a solution to the given system being optimised and is defined in dependence on the system and goal of optimisation. At this point, if it is determined that there are further parameter value sets to be processed, then the next parameter value set is assigned to the parameters of the optimisation algorithm and steps S206 and S206 are repeated, until there are no further parameter value sets to be processed. An optimality score for each parameter is computed.

While Figure 2 shows the steps of executing the optimisation algorithm, generating the candidate updated states, computing an optimality score and assigning a next set of parameter value sets as a consecutive sequence, these steps may be carried out in parallel on multiple processors, so that a set of initial states may be processed by the optimisation algorithm with a first value set, and before this processing is complete, a second parameter value set can be assigned to the parameters of the optimisation algorithm for processing on a second processor at the same time that the optimisation algorithm executed on the first processor. The condition of all parameters being processed in Figure 2 is not satisfied if not all parameter value sets have been assigned to the parameters of the optimisation algorithm for processing. However, the step of selecting the highest-score candidate as the estimated optimal solution only occurs once either a full set of candidate updated states has been generated, i.e. after all processing by the optimisation algorithm has completed, or the processing time limit has been reached. While a number of parameter value sets to be processed may be determined in advance based on a processing budget, the number actually processed may be adjusted dynamically by ending processing once a given limit on time, memory, etc. has been reached.

While Figure 2 shows the step of computing an optimality score for each candidate state immediately after computing the state, this step may be performed at any time after the state is generated. This computation may also be performed on multiple processors in parallel, and may be performed for different updated states at different times. The set of candidate states and their optimality scores are held in memory and updated as processing continues as the algorithm outputs more candidate updated states and scores until all processing is complete. At this point, S214, the candidate updated state corresponding to the highest optimality score is selected as the estimated optimal state of the system.

The invention takes a sequence of parameter value sets for a predefined optimisation algorithm and generates an estimated optimal state of the system by applying the optimisation algorithm parameterised with the value sets of the ordered sequence to various initial states of the system. This provides a method of generating an approximately optimal solution within a processing budget, as the number of parameter value sets processed is dependent on the processing budget. Furthermore, since the processing of states by the optimisation algorithm for different parameter values is independent of other parameter values, the method is suited to parallel processing implementations.

There are multiple possible methods of generating an ordered list of parameters for processing according to the steps outlined above with reference to Figures 1 and 2. Different forms of parameterised optimisation algorithm may also be used according to the method described. An example embodiment of the invention will now be described in which these features are discussed in more detail.

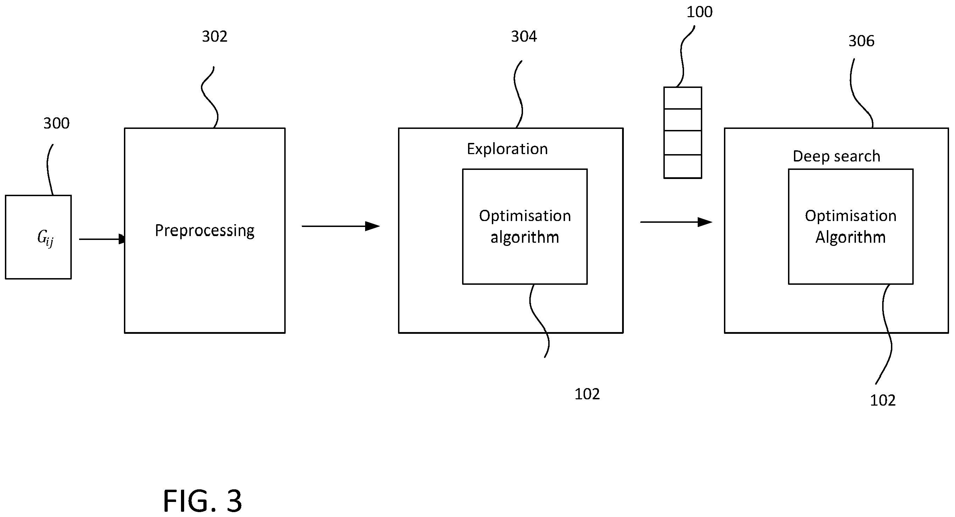

Figure 3 gives a high-level overview of the structure of an algorithm to first generate an ordered sequence of parameters used to define an optimisation algorithm, and then perform the method described above with reference to Figures 1 and 2, also referred to herein as a 'deep search' in order to generate a set of candidate solutions to the optimisation problem, and select an estimated optimal state.

The optimisation algorithm 102 used to generate candidate updated states to be considered as possible solutions to the problem is parameterised by a set of parameters. These parameters can take on a wide range of values, and one problem in performing this method described of executing the optimisation function with multiple sets of parameter values is that it is intractable to perform the full optimisation on a large number of parameter value sets covering a large parameter space. The method shown in Figure 3 introduces two additional steps to narrow the set of parameters to a tractable and useful set of parameters before the 'deep search' implementation of the algorithm for a large number of initial states. The input problem 300, in this example comprising the graph or matrix $G_{ij}$ defining the interactions between the variables of the system, is provided in a pre-processing phase 302. In the pre-processing phase 302, the problem is analysed and, given the parameters of the optimisation algorithm, a range is identified for searching each parameter to avoid wasting resources on applying the optimisation algorithm with significantly sub-optimal parameter values. The pre-processing phase 302 identifies the eigenvalues and eigenvectors of the graph or matrix defining the problem and performs linear stability analysis in order to identify a suitable range for the parameters of the optimisation function. This analysis is described in further detail below. The output of the pre-processing phase 302 is a set of ranges for each parameter to narrow the parameter search space for the next phase of processing.

In the exploration phase 304, the optimisation algorithm 102 is applied to a set of parameter combinations covering the space defined by the ranges identified in the pre-processing phase 302. As described in more detail later, the optimisation algorithm 102 in this implementation uses gradient-descent-based updates to generate approximately optimal states from an initial state over a number of iterations. In order to arrive at a state that is close to optimal from a given initial state, the optimisation algorithm 102 should run for a large number of iterations to allow it to converge to an optimum. However, at the exploration phase there are a range of possible parameters of the optimisation function and it is impossible to perform an in-depth optimisation procedure for each parameter value set.

The goal of the exploration phase 304 is not to find an overall optimal solution to the input problem but to identify a subset of parameter value combinations that is likely to provide good optimisation performance, and that is tractable to explore in an in-depth optimisation or 'deep search' phase. To assess the larger set of parameters searched in the exploration phase for their expected performance in the optimisation algorithm, a 'shallow' optimisation is performed, using a small number of iterations to update a small number of initial states for each parameter value combination being searched. The number of initial states and the number of iterations are defined in advance of the processing in the exploration phase. The number of iterations may also be referred to herein as a 'depth' of the optimisation. The depth of the optimisation applied in the exploration phase 304 is less than the depth of the optimisation applied in the deep search phase 306. Once the shallow optimisation has been run for a suitable set of parameter value combinations within the ranges determined in the pre-processing step, the parameter value combinations can be evaluated based on a metric applied to the updated states generated by the shallow optimisation. Where the goal of the optimisation is to minimise a total energy of an Ising system (as will be described in more detail below), the metric for each parameter value combination may be, for example, a mean energy of the updated states generated by the shallow optimisation algorithm for that parameter value combination. Alternatively, a minimum or median, or any similar metric over the energies generated by the shallow optimisation can be evaluated for each parameter value combination. This evaluation is used to identify a best set of parameters, i.e. those with the lowest mean (or median, minimum, etc.) energy are considered the 'best' parameter value combinations and therefore are the combinations that should be evaluated first at the deep search stage. A subset of parameter value combinations having the best performance against the given metric is output from the exploration phase as an ordered sequence 100 for processing in a deep search phase 306.

In the deep search phase 306, the ordered sequence of parameter value sets (also referred to above as parameter value combinations) are processed by assigning the parameter values of each set of the sequence to the parameters of the optimisation algorithm and performing the optimisation algorithm updates over multiple iterations for multiple initial states. While the optimisation algorithm 102 applies the same update scheme in the exploration phase and the deep search phase, in the deep search phase the number of iterations and initial states for each parameter value set is much larger than the number applied for each 'shallow' optimisation performed in the exploration phase, as the number of parameter value sets to process is smaller. For each updated state generated by the optimisation algorithm in the deep search phase 306, an optimality metric is applied to evaluate the updated state based on the goal of the optimisation. The updated state $s^*$ having the highest optimality score is selected as the estimated solution of the input problem 300.

As mentioned above, the goal for an Ising model is to minimise a total energy of the system, and so the energy of the system may be computed for each updated state and treated as a cost measure. Herein, 'optimality metric' is used to describe a measure that is maximised for optimal solutions, where the term 'cost' is used to describe a measure that is minimised for optimal solutions. Cost and optimality metric as used herein have the same effect in the present application, which is to evaluate a solution based on how well is satisfies the goal of the optimisation. A cost value can be derived from a score and vice versa. For example by setting the optimality metric as the negative of the energy function, the highest optimality score corresponds to the lowest energy. Either term may be used herein to denote a measure of optimality.

Some details of an example optimisation algorithm 102 as applied in one implementation of the invention will now be described in more detail. This example optimisation algorithm will be referred to as the accelerated optimisation algorithm. This is an accelerated gradient-descent-based optimisation algorithm parameterised by multiple parameters $(\alpha, \beta, \gamma)$ according to the method already described. The sequence of parameter values 100 for the optimisation algorithm is generated according to the pre-processing and exploration phases described in Figure 3.

The accelerated optimisation algorithm is configured to solve problems which are provided in the form of the Ising model. The Ising model is formulated as the minimisation of a quadratic function:

$$\min\left(-\sum_{i>j} G_{ij}s_i s_j\right), \qquad (1)$$

where $s_i$ are variables taking binary values $\pm 1$, and $G_{ij}$ are elements of a matrix G the interactions between the spins. The solution to the Ising model is the assignment of binary values to the variables $s_i$ that minimises the above expression.

To solve this problem, an iterative optimisation algorithm 102 can be used. This applies an iterative update of the form:

$$x_{t+1} = x_t - \Delta t \cdot \nabla F(x_t, G), \qquad (2)$$

where x is a continuous real-valued vector which is mapped to a state of binary variables **s**, and VF is a gradient of a function F which depends on the state vectors x and interactions G and which is designed to encourage the update of vector x towards a set of values corresponding to a lower energy state of the system. The above update scheme is commonly referred to as gradient descent, and is known in the field of optimisation.

The above algorithm can be used to solve different formulations of combinatorial optimisation problems, where the function F is defined according to the requirements for the given problem. F is defined for a given problem such that a state x that minimises F is optimal for the given problem. For example, for the problem of drug discovery, a function F might be defined that is minimised when the state corresponds to a candidate having desirable properties of a drug, for example, for high effectiveness and low toxicity. The below description provides further details on how the algorithm of equation (2) is applied for an optimisation problem in the form of the Ising problem. However, as would be clear to a person skilled in the art, the same algorithm and the techniques described herein for selecting parameters of the optimisation algorithm can be straightforwardly applied to other combinatorial optimisation problems by defining a suitable differential function F for that problem.

By defining an appropriate function F, an estimated solution to the Ising problem can be found by applying the above iterative update algorithm over multiple iterations to a vector x corresponding to an initial state of the system. The exact form of F can be defined differently for different problems. The inventors have recognised that, for the Ising problem definition described above, a particularly effective gradient VF takes the general form:

$$\nabla F(x, G) = \alpha \cdot H_1(x_t) - \beta \cdot H_2\big(G \cdot H_3(x_t)\big), \qquad (3)$$

where $\alpha$ and $\beta$ are parameters of the optimisation algorithm, and where $H_1$, $H_2$, and $H_3$ refer to three vectors of linear or nonlinear functions that can be implemented in hardware. $H_1$, $H_2$, and $H_3$ are applied element-wise: different types of linear or nonlinear functions can be used for each element of $H_1$, $H_2$, and $H_3$. The above expression specifies the general form of VF without defining the specific functions to be used, as various computer-implementable functions may be used effectively within a function of the above form. The flexibility to use either linear or nonlinear functions allows solving of combinatorial problems that also include continuous variables that need to be optimized.

A particular expression for VF that may be implemented, having the form specified in equation 3, for example, is:

$$\nabla F(x, G) = \alpha \cdot sin(x_t) - \beta \cdot tanh\big(G \cdot sign(x_t)\big), \qquad (4)$$

where *sin* and *tan* are well-known trigonometric functions, and *sign* is defined as:

$$sign(x) = \begin{cases} -1, & x < 0 \\ 1, & x \geq 0 \end{cases}.$$

The parameter $\alpha$ characterises the system dissipation rate, and controls how much the amplitude of the state **x** is reduced at each time step. $\alpha$ itself may be time-dependent in either a linear or non-linear way. In one example, $\alpha$ is linear in time as follows:

$$\alpha(t) = \alpha_0 \left(1 - \frac{t}{T}\right),$$

where $T$ is the final time once all the iterations have completed.

Given the above expression for VF, equation (2) for the update of the state can be written:

$$x_{t+1} = x_t - \Delta t. \left(\alpha \cdot H_1(x_t) - \beta \cdot H_2\big(G \cdot H_3(x_t)\big)\right). \qquad (5)$$

As parameters of the optimisation function, an ordered sequence of possible values of $\alpha$ and $\beta$ are processed according to the method already described with reference to Figures 1 and 2. $\Delta t$ defines the size of the update at each iteration and may also be referred to herein as the 'learning rate'. $\Delta t$ may also be treated as a parameter of the optimisation algorithm, or alternatively a fixed value may be set for $\Delta t$. If using standard gradient descent as defined above in equation 5, an ordered sequence of parameter values for $\alpha$ and $\beta$ can be generated by the pre-processing 302 and exploration phases 304 shown in Figure 3.

However, a number of improved gradient descent techniques use variations of the above update scheme to accelerate the convergence of the algorithm to an approximate optimal solution. The function F for which the gradient is computed at different states may have a complicated structure, with many local minima for example. Variations of gradient descent have been developed which adjust the update with the aim of converging more quickly on an estimated minimum.

One family of gradient descent methods uses the concept of momentum. Momentum is used in gradient descent to overcome the issue that depending on the exact form of the gradient, the update rule in equation (2) can lead to slow convergence due to fluctuations from one iteration to the next, and causing the state to 'bounce' around an optimum instead of continuously moving towards it. Momentum gradient descent methods are designed to overcome this problem by introducing a 'momentum' term to the update rule in equation (2), yielding the following update rule:

$$x_{t+1} = x_t - \Delta t \cdot \nabla F(x_t, G) + \gamma(x_t - x_{t-1}). \qquad (6)$$

Substituting the expression for VF given in Eq. 3 above, this update rule can be expressed as follows:

$$x_{t+1} = x_t - \Delta t \cdot \left(\alpha \cdot H_1(x_t) - \beta \cdot H_2\big(G \cdot H_3(x_t)\big)\right) + \gamma(x_t - x_{t-1}). \qquad (6a)$$

This corresponds to the dynamics of the differential equation:

$$\frac{d^2x}{dt^2} = a \cdot \frac{dx}{dt} - b \cdot \nabla F(x, G) \qquad (7)$$

The additional term $\gamma(x_t - x_{t-1})$ reduces the 'bouncing' around of the state by pushing the update in the direction of the most recent update, with the effect that updates have a tendency to continue along the path it is already taking, and therefore become less susceptible to 'bouncing' due to fluctuations in the gradient. The parameter $\gamma$ is generally less than 1 as the dependence of a given state on previous states should weaken with the number of iterations between the current state and the earlier state. In other words, when the above update rule is applied iteratively, the relationship between the current state and an earlier state is dependent on $\gamma^n$, which should decrease with n such that a given state is less dependent on a state further away in time than it is on the most recent state.

A second variation of momentum is Nesterov momentum, where the update rule is given by the following equation:

$$x_{t+1} = x_t - \Delta t \cdot \nabla F(x_t + \gamma(x_t - x_{t-1}), G) + \gamma(x_t - x_{t-1}). \qquad (8)$$

This also corresponds with the differential equation (7), however the Nesterov momentum update evaluates the gradient at a point $x_t + \gamma(x_t - x_{t-1})$ to which the momentum term has been applied, instead of evaluating the gradient at the most recent state $x_t$. It will be appreciated that either of the standard momentum defined in equation 6 or the Nesterov momentum update in equation 8 may be used as the optimisation algorithm for a given combinatorial optimisation problem, and that different choices may be suitable for different optimisation problems and associated functions F.

All elements of the vector x are updated at each iteration of the update schemes in equations 5, 6 and 8 with the rate of learning (i.e. the size of the update at each iteration) defined by the time step $\Delta t$. A good value for $\Delta t$ is one that is large enough that the updates move relatively quickly towards an optimum, but small enough that the steps do not 'overshoot' a minimum due to a large update.

When the expression of equation (3) is substituted in equation 6 above, the accelerated optimisation algorithm update becomes:

$$x_{t+1} = x_t - \Delta t \cdot \left( \alpha \cdot H_1(x_t) - \beta \cdot H_2\big(G \cdot H_3(x_t)\big)\right) + \gamma(x_t - x_{t-1}). \qquad (9)$$

The expression is similar for Nesterov momentum, except, as noted above, that the gradient is evaluated at an adjusted state $x_t + \gamma(x_t - x_{t-1})$:

$$x_{t+1} = x_t - \Delta t \cdot \begin{pmatrix} \alpha \cdot H_1\big(x_t + \gamma(x_t - x_{t-1})\big) - \\ \beta \cdot H_2\left(G \cdot H_3\big(x_t + \gamma(x_t - x_{t-1})\big)\right) \end{pmatrix} + \gamma(x_t - x_{t-1}). \qquad (10)$$

Either or both of the above accelerated optimisation algorithms can be used with the methods described herein to generate an optimal system state.

Other accelerated gradient descent algorithms may be used for the optimisation algorithm 102. For example, a family of algorithms use an adaptive learning rate to adjust the updates over time and cause the states to accelerate more quickly to an optimum than they would for standard gradient descent methods.

The adaptive moment estimation method (Adam) is an extension of gradient descent that uses gradients and squared gradients which decay exponentially in time:

$$x_{t+1} = x_t - \Delta t \frac{\sqrt{1 - \xi_1}}{1 - \xi_2} \frac{m_t}{\sqrt{v_t} + \epsilon} \qquad (11)$$

$$m_t = \xi_1 m_{t-1} + (1 - \xi_1)\nabla F(x_t, G) \qquad (12)$$

$$v_t = \xi_2 v_{t-1} + (1 - \xi_2)\nabla F(x_t, G)^2 \qquad (13)$$

Here the exponential moving averages are used for estimating the average gradient $m_t$ and the average squared gradient $v_t$. The effective learning rate varies in the iterative update rule (11) and depends on the estimated squared gradient magnitude. The two extra parameters $\xi_1$ and $\xi_2$ need to be optimised for the Adam method compared to the previously considered momentum gradient descent methods. Therefore, where the optimisation algorithm uses the Adam method, each parameter value set comprises values for $\xi_1$, $\xi_2$ along with the parameters of the function VF, such as $\alpha$ and $\beta$.

Each of the optimisation algorithms described above take as parameters at least the $\alpha$ and $\beta$ of VF, and optionally additional parameters $\gamma$, $\Delta t$ and others. These parameters are the parameter sets for which ranges are determined and values are searched in the pre-processing and exploration phases, respectively. These steps will now be described.

The pre-processing steps are described below for determining ranges and parameter values for $\alpha$, $\beta$, $\gamma$ where the optimisation algorithm uses a momentum update scheme such as equation 6 or 8. However, as would be clear to a person skilled in the art, the same methods can be applied to search a space of any number of parameters. However it should be noted that the space grows exponentially larger for each extra parameter of the optimisation algorithm, and therefore that it becomes more difficult to identify a good sequence of parameter value sets, and therefore the inventors have recognised that preferred embodiments use optimisation algorithms with a small number of parameters, such as three or four parameters. In the pre-processing phase, the goal is to determine a range of values to search which is likely to lead to good performance of the optimisation algorithm for at least some of the parameter values selected from that range.

As mentioned above, $G_{ij}$ represents the interactions between the binary-valued 'spins' in the Ising problem. The proposed method of determining the range involves performing eigenvector analysis on the graph or matrix $G_{ij}$ representing the problem. An eigenvector of a matrix A is a vector **v** that satisfies the equation:

$$A\mathbf{v} = \lambda\mathbf{v}$$

for some scalar value $\lambda$, where $\lambda$ is referred to as the eigenvalue of A corresponding to the eigenvector **v**. An eigenvector only changes by a scalar factor when transformed by the matrix A. Eigenvalues and eigenvectors are well known concepts in linear algebra, and will not be described in any further detail herein.

The k largest eigenvalues of the graph G of the given Ising problem are computed, where $k$ is a predetermined number. The eigenvectors **x** corresponding to these largest eigenvalues are mapped to binary-valued states s and the energy for these states is computed according to equation 1, with the lowest energy of these states being used as a trivial energy threshold.

In order to determine a range from the trivial energy threshold, a linear stability analysis is performed for the optimisation algorithm update formula with the eigenvalue corresponding to the energy threshold determined from the eigenvector analysis. Linear stability is used to determine relationship between $\alpha$ and $\beta$ parameters for which a stationary solution to a differential equation is trivial, i.e. corresponds to a stationary state with all variables $x_t$ being zero, or non-trivial, i.e. produces a stationary state with nonzero variables $x_t$. This can be applied to determine regions of the parameter space where the energy is lower than the trivial energy threshold associated with the eigenvalue, which is the area of interest in the optimisation of the Ising model, since the goal is to find the state with the lowest energy. Denoting $\beta_{new} = \dfrac{\beta}{\lambda}$, the above analysis provides properly scaled terms in the iterative update rule for any input graph G with parameters $\alpha$, $\beta_{new}$, and $\gamma$ being in a similar optimal unit range (e.g. $\in [0, 1]$).

Once the range of parameter values is determined for each parameter of the optimisation, values within these ranges are implemented as parameters of the optimisation algorithm 102 in the exploration phase 304. Taking the accelerated optimisation algorithm with parameters $\alpha$, $\beta$ and $\gamma$, the ranges from the pre-processing phase 302 define a three-dimensional space within which any given point defines a triplet of parameter values to be substituted as parameters of the optimisation algorithm. The goal of the exploration phase is to explore this three dimensional space efficiently and evaluate the expected performance of the optimisation for each point sampled from the space such that a subset of 'good' parameters can be passed for more extensive investigation in the 'deep search' phase 306.

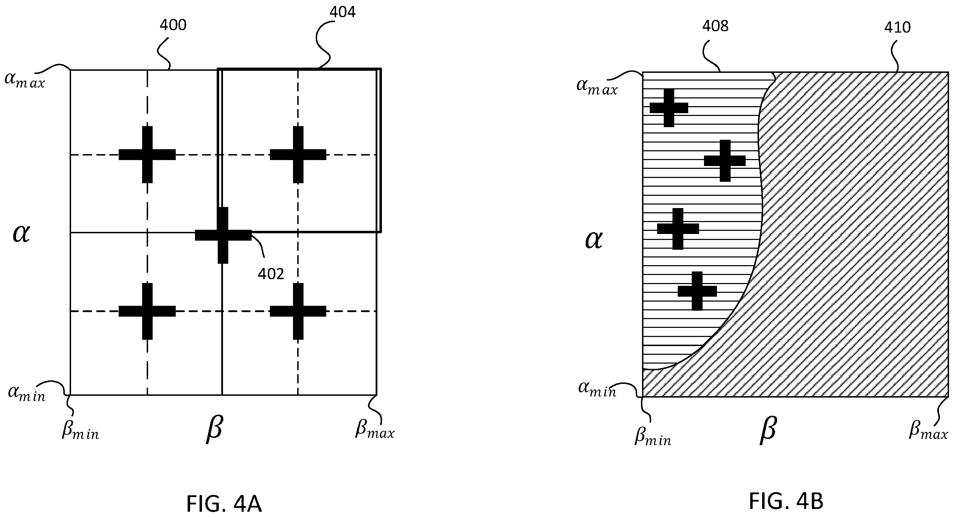

To illustrate one possible method of exploring the space of parameters, Figure 4a shows an example method for searching of a parameter space in 2D (for example where a value for $\gamma$ is fixed and the optimisation algorithm is dependent only on parameters $\alpha$ and $\beta$). As shown on the left hand side of Figure 4, the range for both parameters of $\alpha \in [\alpha_{min}, \alpha_{max}]$ and $\beta \in [\beta_{min}, \beta_{max}]$ is illustrated as a rectangular region 400 in two-dimensional space. While this figure shows the parameter as $\beta$, this is equivalent to searching over an appropriate range for $\beta_{new}$, which is scaled as described above by the eigenvalue $\lambda$ to constrain the search to an appropriate range. Any point sampled from this region defines a pair of values for $\alpha$ and $\beta$ within the determined ranges. In the exploration phase, a set of parameter value combinations covering the region can be sampled by first sampling the centre point 402 of the region, and then by splitting the region into a grid of four sub-regions 404 and sampling the centre point of each of these sub-regions 404. Each sub-region can be divided into a further four sub regions, and the centre point of each further sub-region can be sampled. For each sampled point in parameter space (i.e. each sampled pair of parameter values) the optimisation algorithm is run over a small number of iterations (e.g. 100-200) and for a small number of initial states (e.g. 10-20) in order to generate a set of updated states. A performance metric is measured for the set of updated states generated at each sampled point, for example a mean, median or minimum energy of the system for the updated states. This allows each sampled point to be labelled with an estimated performance of the optimisation for that parameter value set. This process is repeated until enough parameter combinations have been sampled to get a reasonable idea of the performance across the region 400 of parameter space.

As shown in Figure 4b, once parameter value sets have been evaluated, the region can be labelled with the estimated performance based on the results of the performance metric in that region. This may take the form of a heatmap, where the shade of each pixel of the heatmap is based on the performance metric for nearby points. A simple map is shown in Figure 4b where the region is divided in two based on some threshold value of the performance metric, with a region 408 in which the parameters score above the threshold value shown with horizontal lines and regions where the parameter value sets score below the threshold value are shown with a diagonal line. As mentioned above, the deep search phase 306 is applied to a subset of the best parameter value sets identified in the exploration phase 304. The size of this subset may be constrained by limits on compute resources or time to a size $L$. The $L$ parameters with the highest performance scores are selected from the region 400 and passed as an ordered sequence, in descending order from the highest performance, to be processed in the deep search phase.

The deep search phase proceeds as described in Figure 1, wherein the optimisation algorithm 102 is applied with each parameter value set of the sequence assigned as the parameters of the algorithm. The optimisation runs for a predetermined number of iterations on a predetermined number of initial states. These quantities are determined based on a desired processing budget for the deep search phase, for example the typical number of iterations, i.e. the number of times the state is updated for a given initial state and set of parameter values, may be in the range 1000-10000and the typical number of initial states may be in the range 100-1000 for each combination of parameters.

In some embodiments, the deep search phase may end once a processing budget has been reached. It should be noted that 'processing budget' as used herein includes limits on computing resources as well as limits on time. For example, the deep search phase may end once a certain number of operations have been performed, or after a predetermined amount of time within which a solution needs to be provided. In this case, while the full sequence of parameters passed from the exploration phase has not been processed, the estimated optimal state is selected from the states already computed in the deep search phase. In this case, since the deep search phase processes each parameter value set of the sequence in the given order, it is preferable that the sequence has been ordered according to performance as described above. However, in other embodiments without the exploration phase described above, the parameter value sets may be generated randomly from within a parameter search space and passed in random order to the deep search phase.

It should be noted that Figures 3 and 4 and the corresponding description refer to specific embodiments of the invention and other alternatives are possible. In some embodiments, instead of performing a spectral analysis as described for the pre-processing phase 302 of Figure 3, in order to limit the range to be searched for each parameter an initial set of bounds may be defined initially and dynamically updated based on a computed performance of solutions within the bound in comparison with solutions for parameters outside of the current bound. In other words, given a current bound for $\alpha$ of $[\alpha_{min}, \alpha_{max}]$, by increasing the bound to, for example, $10^*\alpha_{max}$ and evaluating solutions for parameters within the increased bound, it may be determined that solutions outside the current bound are better than solutions inside the current bound and in this case the bound is increased. This process may be repeated over many iterations until a suitable region of parameter space is found. An ordered sequence of parameter value sets may be randomly generated by sampling values at random from within the range for each parameter using an existing random sampling technique, for example Monte Carlo random sampling within the region, where the region or range for each parameter is determined for example by spectral analysis or dynamic adjustment of a set of bounds. Alternatively, a brute-force grid search may be performed over all parameters within a given range. A grid search performs an exhaustive search through the region of parameters defined by the range for each parameter, exploring each point of a grid constructed within the region of parameter space to be searched.

Bayesian approaches create a probabilistic model for the objective function and focus on the most promising parameter values for evaluation of the objective function. Bayesian approaches perform a more directed search than random search or grid search approaches, as random search and grid search techniques, while straightforward and fast to implement, ignore the results achieved for the previously seen parameters and could spend a lot of computational resources evaluating bad regions of parameters. In another alternative, the Bayesian methods can be used either alone or in addition to the parameter search process described in Figure 4 to determine a sequence of parameter value sets to provide for further investigation to the deep search phase. However, random and grid search techniques are faster than the more directed search of Bayesian methods and therefore in preferred embodiments random search and/or grid search is used alone or in combination with Bayesian methods.

Furthermore, the optimisation algorithm can take various forms, including non-gradient based optimisation algorithms. As described above, derivative-free methods such as simulated annealing and particle swarm optimisation may be used. Any parameterised optimisation algorithm can be used in conjunction with the methods described herein for searching the parameter space and determining an optimal state of the system.

Furthermore, while the above examples describe methods to solve the Ising problem, other combinatorial optimisation problems can be solved using the techniques described above, where the optimisation algorithm is adapted to the given problem. For a different optimisation problem, the $\beta$ term in the $\nabla F(\boldsymbol{x_t}, G)$ would need to be modified accordingly to represent the gradient of the new optimisation problem.

Implementation in hardware

The methods described above may be implemented on one or more hardware processors. In some embodiments the optimisation methods may be provided via a cloud service wherein a user can input a given optimisation problem via a web interface, which is communicated over a network to a set of one or more hardware processors situated remotely from the user which are configured to implement the above optimisation methods and generate an estimated solution which is communicated back to the user via the network. The processors may comprise CPUs and/or GPUs. As mentioned above, either or both of the exploration phase and the deep search phase may be performed in parallel for multiple sets of parameter values simultaneously.

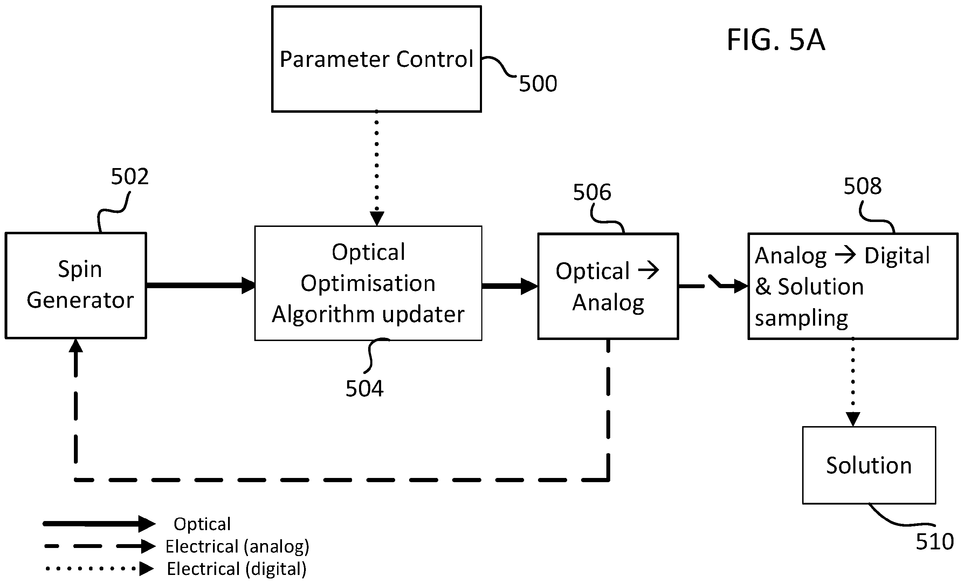

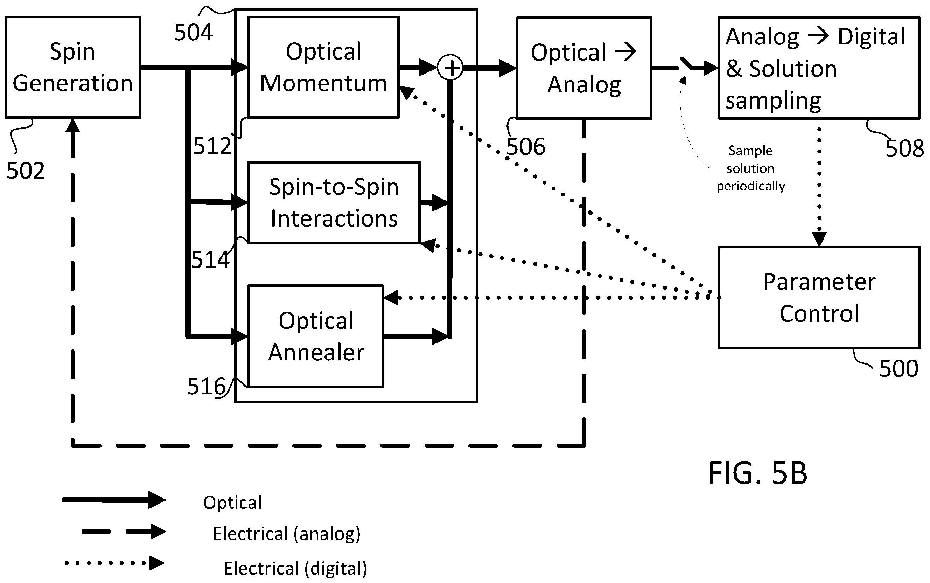

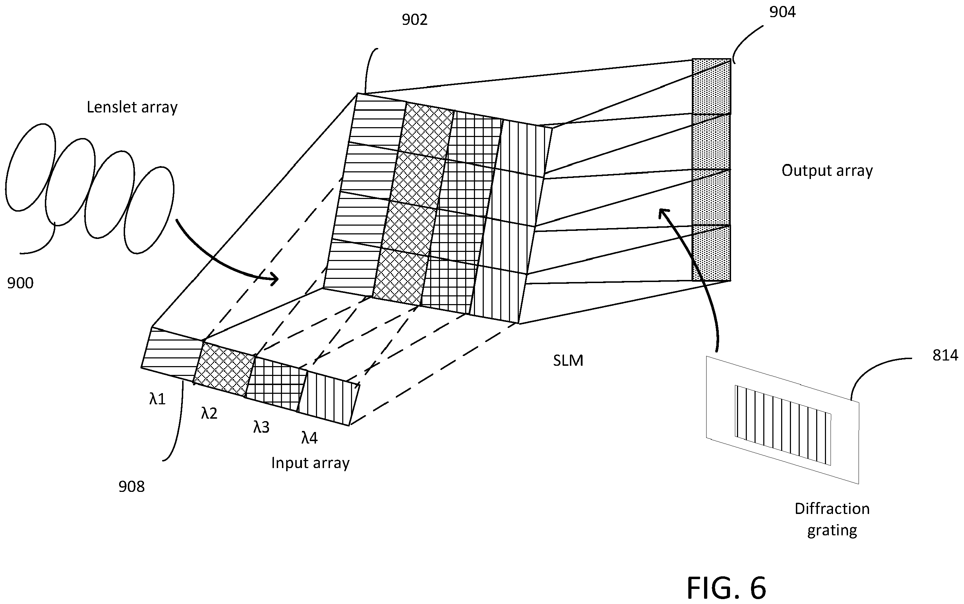

In some embodiments, the above-described methods are implemented using an optical computer comprising optical hardware. An optical computer is configured to implement arithmetic and logical operations using optical components including but not limited to lasers, modulators, photodetectors, lenses and diffraction gratings to process light signals, as will be described below with respect to Figures 5A, 5B and 6. An optical computer may additionally comprise analog and/or digital electronic hardware to convert signals between the optical, analog and digital domains. In an optical solver, light signals are used to represent the input variables (e.g. 'spins' in the Ising problem), and an optical element is used to combine the signals in a way that models the interaction between the variables (e.g. the matrix G described above). Optical elements that perform a vector-by-vector multiplication in the optical domain, such as a liquid crystal display or a ring-resonator, are known in the art. Optical hardware for carrying out arithmetic operations such as vector multiplication is described in the earlier applications: European Patent Application Nos. 21155439.9, 21155447.2 and 21155428.2, which are hereby incorporated by reference in their entirety.

Figure 5A shows a schematic block diagram of the functions performed by an optical computer for implementing the combinatorial optimisation methods described above. In particular, optical hardware is used to model values of the variables of a given combinatorial optimisation problem in numerical properties of light signals, such as phase or amplitude, and one or more optical components are used to apply an optimisation algorithm such as those described above, parameterised by a set of parameter values, to the variables in order to generate an optical representation of the optimal state of the system modelled by the given optimisation problem. The optical signals may be converted between the optical domain and the digital domain one or more times during the computation, as will be described further below with reference to Figures 5A and 5B.

As mentioned above, the present invention provides a method of determining approximate solutions to a combinatorial optimisation problem using a parameterised optimisation algorithm, by processing a list of possible parameter values in order, applying the optimisation algorithm with the parameters of the optimisation algorithm set to the respective parameter values of the list in order to generate candidate solutions, before evaluating the candidate solutions according to an optimality metric, and selecting as the best solution the one with the highest optimality score.

Figure 5A shows the implementation of the above-described optimisation method in an optical computing system for a given optimisation algorithm and a list of possible sets of parameter values to be applied in the optimisation algorithm to generate candidate solutions. A spin generator 502 generates a light signal representing a set of values for the variables of the problem, i.e. an initial state. The spin generator comprises a light source and may comprise one or more modulators which encode a numerical value in a property of the light. Light signals may, for example, be phase modulated, such that each variable has an associated signal whose phase relates to the value of that variable. Alternatively, the light signal may be amplitude modulated, such that the amplitude of the light wave for each variable is directly related to the value of that variable. In preferred embodiments, the variable values are modelled using amplitude modulation as detection of phase-modulated signals requires more hardware complexity. Amplitude and phase modulators are well-known in the art of optical computing and will not be further described herein. The spin generator 502 outputs a set of modulated light signals representing an initial state of the system modelled by the given combinatorial optimisation problem. This is received by an optical optimisation update component 504 which comprises optical hardware for implementing the arithmetic logic of the optimisation algorithm update step. Each signal generated by the spin generator may have a different wavelength. In preferred embodiments, different initial states for each parameter value set are used. These different states, for example randomly generated states, are passed to the spin generator in the digital domain, and these are converted to modulated light signals encoding the initial values. In other embodiments, the same initial states may be used for multiple parameter sets.

The configuration shown in Figure 5A can be used to generate 'spins' or signals representing a single state at any given time, or alternatively, provided the hardware is configured to provide enough signals to represent more than one state at a time, then multiple states may be processed by the optimisation algorithm in parallel. While the below description outlines the process for updating a single state, it will be clear to a person skilled in the art how to implement the same techniques for hardware configurations capable of processing multiple states in parallel.

As described above for a variety of update algorithms, the algorithm is parameterised by a set of parameter values. These are provided by a parameter controller 500, which passes a set of parameter values to the optimisation algorithm hardware in the digital domain. A digital-to-optical conversion is performed to transform the digital signal representing the values for the parameters of the algorithm to optical signals which can be processed by the optical hardware of the update component 504. This hardware comprises one or more components for implementing arithmetic operations on optical signals, for example a vector multiplier and/or a detector for performing addition of a set of modulated signals. The hardware used to implement the algorithm update depends on the form of the update itself. An example implementation comprising optical components for implementing an update of the form described above in Equation 6a is shown and described in further detail below with reference to Figure 5B. The updater 504 performs iterative updates according to the specified algorithm, such as gradient descent or gradient descent with momentum, with the signal output at each iteration being converted to an analog signal by an optical-analog converter 506, which is passed as a feedback signal back to the spin generator, providing the signal representing the input state for the next iteration. This is repeated over many iterations, as described above, to allow the solver to converge to an optimal solution. The optical-to-analog converter 506, which may be, for example, a photodetector, which converts a light signal to an electrical current, with a known relationship between the light property in which the values of the variables are encoded and the electrical current.

The signals output by the optical-to-analog converter 506 may be sampled periodically and converted to digital signals by an analog-to-digital converter. Solutions are sampled in order to assess the solutions periodically against the optimality metric (for example by computing the total energy for each of the sampled solutions) and to determine a best solution. Once the optimisation terminates, a candidate solution 510 in the form of a digital representation of the optimal state generated by the algorithm, which may be interpreted based on the definition of the problem and used to configure a real-world system. Each set of parameter values of the list of parameter value sets provided to the parameter controller 500 is applied to multiple initial states generated by the spin generator to generate multiple candidate solutions. Once a set of candidate solutions is generated for the given parameter value set, the parameter controller 500 selects the next parameter value set and the optimisation algorithm is applied with the new parameter values to a new set of initial states generated by the spin generator 502.

For example, where the model is a set of chemical compounds with the optimisation problem being the discovery of an effective and safe new drug, the digital output of the system may be a set of numbers representing the positioning of specific molecules or atoms in the candidate compound. It should be noted that the variables processed by the algorithm may not be the direct variables of the model, for example, the algorithm update may be applied to real-valued numbers, while the state of the model is binary, each variable taking only values of zero and one. In this case, the values output by the algorithm are mapped to the variable type for the given model before a solution is output. Note that there is a direct mapping from the values processed by the algorithm and the variables of the model, and references herein to values refer to both the values processed by the algorithm and to the variables of the system.

Figure 5B shows an optical computer for implementing an optimisation algorithm of the form described above in Equation 6a. As described with reference to Figure 5A, the spin generator 512 generates light signals representing a vector x of numerical values which map to an initial state of the system being modelled. This is processed by the optical optimisation algorithm updater 504, which in this example comprises three components: an optical momentum component 512, a spin-to-spin interaction component 514 and an optical annealer 516.

The optical momentum component implements the momentum term $\gamma(x_t - x_{t-1})$ of Equation 6a. This is a subtraction of a vector $x_{t-1}$ of signals from a previous iteration from the vector of signals $x_t$ of the current iteration, followed by a scalar multiplication. Addition of light signals may be performed by detecting the aggregated signals at a photodetector, before converting the resulting analog signal back to the optical domain. For amplitude-modulated light of different wavelengths, for example, the multiple signals are added simply by detecting the signals together at the photodetector, with the intensity of the resulting combined signal being equal to a sum of the intensities of the individual signals. Subtraction may be performed by adding the positive signals and negative signals at separate detectors to generate two electrical signals, corresponding to the positive and negative terms of the subtraction, and subtracting the two terms in the electrical domain. A scalar multiplication may be performed using attenuators or amplifiers on the resulting light signal to multiply the amplitude (or intensity) by the corresponding factor given by the optimisation algorithm.

The spin-to-spin interaction component implements the term of Equation 6a that contains the matrix G, i.e.: - $\Delta t \cdot \beta \cdot H_2(G \cdot H_3(\boldsymbol{x_t}))$. Different optical hardware can be implemented to evaluate different possible functions $H_2, H_3$. For example, where $H_2$ and $H_3$ are linear functions, these functions may be implemented as scalar multiplications and addition operations on the respective vectors of signals to which they are applied. Non-linear functions are performed by particular optical components or combinations of optical components such as photodetectors which are known to produce or approximate non-linear functions. Such optical components will be known to a person skilled in the art of optical computing. The operation $G \cdot H_3(\boldsymbol{x_t})$ is a matrix-by-vector multiplication, and may be implemented in various ways. In one configuration, described below with reference to Figure 6, and described in further detail in European Patent Application Nos. 21155439.9, 21155447.2 and 21155428.2, a wavelength selective switch configuration can be implemented to perform vector-by-matrix multiplication, where each element of the input vector is associated with a light signal having a distinct wavelength.

Finally, the optical annealer 516 implements the remaining term of $x_t - \alpha\Delta t\, H_1(\boldsymbol{x_t})$, using the optical components described above for addition and scalar and vector multiplication as necessary.

The signals generated by the three components of the optical optimisation algorithm updater are combined to generate a signal representing the next state of the system, in line with Equation 6a. These signals may be combined into a single beam as shown by the summation symbol, and this may be detected at a photodetector, which performs a conversion from the optical to the analog domain. As described above with reference to Figure 5A, the algorithm is performed iteratively, and the output state is passed after the optical-to-analog conversion as a feedback signal back to the spin generator 502, which generates light signal representing that updated state, to be processed once again by another algorithm update step. The output states are sampled periodically and converted to the digital domain by a converter 508. The parameter controller 500 sets the values of the parameters of the optimisation algorithm, in this example these are $\alpha$, $\beta$ and $\gamma$. As described earlier, the parameter controller selects each set of parameter values from a list of parameter value sets in order, and inputs the parameter values to the respective optical elements implementing the algorithm. The algorithm is performed on multiple initial states so as to generate a set of multiple candidate solutions. Once the algorithm is performed on a sufficient number of initial states, the parameter controller 500 selects the next parameter value set from the list and sets the parameter values for the optical components implementing the respective terms of the algorithm's update step. The number of initial states may be determined in advance, or it may be determined dynamically based on the resources available. For example, after a certain amount of time for implementing the optimisation algorithm for a given set of parameter values, the parameter controller 500 may be configured to update the algorithm parameters with the values of the next set of value of the list, and begin processing of initial states for that set of parameter values.

Note that the above description of optical computer systems describes its use for a deep search phase, i.e. where a list of parameter values are already determined with which the optimisation algorithm is to be applied, and where the best solution is output from the set of solutions generated by the optimisation algorithm parameterised by one of the parameter value sets on the list. However, as described above, the optimisation algorithm can be implemented in an exploration phase, in order to determine from a wide range of possible parameter values, a shorter list of parameter value sets suitable for further exploration in a deep search phase. In this embodiment, the optimisation algorithm is implemented first for a large number of possible parameter values within the parameter space, but on a smaller number of initial states for each parameter value set and for fewer iterations, such that the 'solutions' are indicative of the quality of the algorithm for that parametervalue set, and the results of this exploratory optimisation phase is used to generate a list of parameter value sets to be implemented on a large number of initial states and for more iterations of the optimisation algorithm. In this embodiment, the hardware configuration shown in Figure 5A and 5B is used for both the exploration phase, to generate and sample initial solutions 508 which are evaluated against an optimality metric, such as the energy function. The parameter controller 500 uses the evaluated solutions to narrow the set of parameter value sets to determine a smaller set of candidate parameter value sets of the optimisation algorithm, and the controller sets these values in the hardware 504 configured to implement the optimisation algorithm for deeper exploration in the deep search phase, as already described above. Figure 5B therefore shows the use of the optimisation algorithm over multiple phases, with the results of the exploration phase feeding back to the implementation of parameters in the deep search phase, as indicated by the arrow between the solution sampling 508 and the parameter controller 500. However, as noted above, the list of parameters may be obtained by other methods, and in this case, the hardware is configured to implement a fixed set of parameter values, such that the solution output for a given set of parameter values is not used to inform future parameter values of the optimisation algorithm. This case is illustrated in Figure 5A, and may be implemented for any specific hardware configuration for implementing particular instances of an optimisation algorithm, such as the configuration 504 shown in Figure 5B.

Note that the same optical computer may be used to implement both the 'deep search' phase and the 'exploration phase' described above, wherein the parameters are selected either at random or by some search technique on a predefined parameter space, and the optimisation algorithm is run for each of a larger set of parameter value combinations, but with each optimisation being performed for fewer iterations and on a smaller number of initial states than when processing the parameter value sets of the determined list in the 'deep search' phase described above.

Figure 6 shows an example wavelength-selective switch configuration that may be implemented in an optical computing system for performing vector-by-matrix multiplication, which may be used to implement the spin-to-spin interaction (also referred to as variable interaction) term of the optimisation algorithm. This wavelength selective switch comprises an input array 908 of light sources generating a set of signals of different wavelengths, a lenslet array 900, a modified spatial light modulator 902, a dispersion element 814 (e.g. diffraction element) and an output array of light signals which are detected at an array of photodetectors, not shown in Figure 9.

A spatial light modulator (SLM) comprises a set of modulators configured to modulate incident light by different respective factors. Typically, a spatial light modulator comprises a plurality of vertical columns, with a different factor associated with each column, such that a light signal received at any point along a given column of the SLM is modulated by the same factor. To use a spatial light modulator for vector-by-matrix multiplication in this example solver architecture, the vertical axis of the SLM needs to provide different weights even for the same wavelength, so that the whole functionality of the vector-by-matrix multiplication is achieved. This is because, for matrix multiplication, the input vector needs to be multiplied by each row of the matrix Q to generate the full output vector. The SLM 902 is a modified version of a typical SLM (which comprises one modulation factor per column), wherein an array of modulators is arranged in an array, with the losses applied by each modulator reflecting the weights of the matrix to be applied to the input, i.e. a row of the modified SLM encodes the weights in a row of the matrix. Thus, each of the input signals needs to be processed to be spread out vertically such that they hit each row of the SLM 902, corresponding to a series of vector-by-vector multiplications.

In the present example, the input array 908 comprises the signals of the vector $H_3(x_t)$. This vector is passed through a lenslet array 900 having a particular geometry that causes the signals to spread out vertically, while collimating the beam in the horizontal direction of the SLM 902 corresponding to that signal's wavelength. This allows more input signals of different wavelengths to be processed at a single SLM. A lenslet array improves the collimation properties of the beam in both directions.

The SLM 902 comprises a 2D array of modulators, each element of the array applying a respective weight of the matrix G to the received input signal, in contrast with a typical SLM, which does not require elements in the same 'column' but different vertical positions to have different values. Each weighted signal at a particular wavelength, but modulated with a different weight, i.e. each signal of a column of the SLM 902, needs to bounce off the dispersive element 814 at a different vertical position to guarantee that the combination of the WDM signals occurs at the right photodetector in the photodetector array 904. The dispersive element may be implemented as a diffraction element such as a diffraction grating or prism. The output signals may be directed from the element 814 via one or more lenses, to direct the signals into a beam at the correct vertical height to be detected using incoherent addition at the photodetector corresponding to the output vector element represented by that beam.

The wavelength-selective switch configuration shown in Figure 6 is just one example of an optical hardware configuration suitable for implementing the variable interaction term of the optimisation algorithm. Other components such as ring resonators and Mach-Zehnder interferometers may alternatively be used to implement vector multiplication. The matrix-by-vector multiplication may be decomposed into a set of vector-by-vector multiplications, each of which is implemented by one of the components mentioned above.

It will be appreciated that the above embodiments have been disclosed by way of example only.

More generally according to one aspect disclosed herein, there is provided a computer-implemented method comprising: receiving a plural number of candidate parameter value sets of an ordered sequence of candidate parameter value sets in an order specified in the ordered sequence, each of said plural number of candidate parameter value sets comprising a respective candidate parameter value for at least one parameter of an optimisation algorithm, wherein the number of received candidate parameter value sets is based on a processing budget; for each candidate parameter value set in the sequence: applying the optimisation algorithm, with the at least one parameter of the optimisation algorithm set to the respective candidate parameter value, to a plurality of initial states of a model representing a system in order to generate a corresponding plurality of candidate updated states of the model, and evaluating the plurality of candidate updated states according to an optimality metric, the evaluating comprising evaluating each of the candidate updated states according to the optimality metric to generate a corresponding optimality score for the candidate updated state, such that different ones of the candidate updated states have different optimality scores; selecting, as an estimated optimal state of the model, the candidate updated state that has the highest corresponding optimality score; and outputting the selected estimated optimal state of the model to one of: a user interface, a network interface, computer storage, or a destination application.

The candidate parameter value sets may be received from a user input, computer memory, network interface, or from an external application or device configured to generate parameter value sets.

Outputting the selected estimated optimal state to a user interface may comprise providing the state in a graphical user interface implemented on a computer display, or by producing an auditory output of the state interpretable by a user or other system. The computer storage may be one of: non-volatile computer memory, such as a hard disk drive, solid state drive, or flash drive, or temporary computer storage such as random-access memory. The destination application may be a computer-implemented application such as a modelling application or computer-aided design application. The user or application may issue controls or actions to implement a state in a real-world system, either directly or by controlling a tool operable to create or modify a state in the real-world system. The estimated optimal state may also be output to a device external to the system on which the optimisation method is performed.

In embodiments, the at least one parameter of the optimisation algorithm is a plurality of parameters of the optimisation algorithm, wherein each of said plural number of candidate parameter value sets comprises a plurality of candidate parameter values, each candidate parameter value of the candidate parameter value set being a respective value of a respective parameter of the optimisation algorithm, and wherein the step of applying the optimisation algorithm to the plurality of initial states comprises applying the optimisation algorithm with the plurality of parameters of the optimisation algorithm set to the respective plurality of candidate parameter values.

In embodiments, the received candidate parameter value sets are selected as a subset of the first $k$ parameter value sets of a sorted list of parameter value sets, where $k$ is a number selected based on the processing budget.

In embodiments, the sorted list of parameter value sets is sorted according to a performance metric of the optimisation algorithm, wherein for each respective one of the parameter sets in the sorted list the performance metric measures an expected performance of the optimisation algorithm with the parameters of the optimisation algorithm set to the respective parameter value set.

In embodiments, the optimisation algorithm is an iterative optimisation algorithm comprising an update rule to generate a state for a next iteration when applied to a state for a current iteration; wherein for each parameter value set in the sequence said applying of the optimisation algorithm comprises: iteratively performing an update by applying the update rule to the initial state over a predefined full depth in order to obtain the candidate updated states, wherein the full depth is the number of iterations in which the update rule is applied.

In embodiments, the step of determining the sorted list of parameter value sets comprises: sampling a plurality of combinations of parameter values from within a predetermined range for each parameter; for each combination: applying a modified optimisation algorithm to an exploratory set of initial states of the system to generate a set of exploratory updated states, evaluating each of the exploratory updated states according to the optimality metric to generate a corresponding optimality score, and determining a performance metric comprising a representative measure of the optimality score aggregated over the exploratory updated states; ordering the combinations according to the computed performance metric; wherein the modified optimisation algorithm comprises iteratively applying the update rule over a partial depth, the partial depth being the number of iterations in which the update rule is applied by the modified optimisation algorithm, wherein the partial depth is less than the full depth and/or the exploratory set of initial states is smaller than the plurality of initial states.

In embodiments the model comprises a matrix, and wherein the range for each parameter is determined by performing linear stability analysis on a selected eigenvalue of the matrix.

In embodiments the eigenvalue is selected by computing a predetermined number of the largest eigenvalues and computing the optimality score for the corresponding eigenvectors, and selecting the eigenvalue corresponding to the eigenvector yielding the highest optimality score from the computed optimality scores.

In embodiments, the processing budget comprises a constraint on one or more of: processing time, memory consumed, a number of processing cycles performed, or processing energy consumption; the number of received candidate parameter value sets being the number that can be processed within the constraint of the processing budget.

In embodiments, the system is represented by a graph defining interactions between pairs of variables of the system, and each state of the system is an assignment of values to the variables of the system.

In embodiments, the optimality score is computed by evaluating an energy function of the model, the energy function representing the total energy of a physical system represented by the model.

In embodiments, the optimisation algorithm is a gradient descent algorithm with momentum.

In embodiments, the system represented by the model is one of a computing system, electronic system, electrical or electromagnetic system, mechanical system, chemical system, or an application of a treatment to a living being, and wherein the method further comprises implementing the estimated optimal state in the system.

Another aspect disclosed herein provides a method of optimising the state of a system representable by a matrix G, the method comprising:

> a. receiving an input vector $\mathbf{x}_o$ representing the state of the system at an initial timestep t=0 and iteratively updating the vector at each consecutive timestep t according to an update formula of the following form:
> b. $x_{t+1} = x_t - \Delta t \cdot [\alpha \cdot H_1(\mathbf{x_t}) - \beta \cdot H_2(G \cdot H_3(\mathbf{x_t}))] - \gamma(\mathbf{x_t} - \mathbf{x_{t-1}})$,

wherein $H_1, H_2, H_3$ are linear or nonlinear functions (the functions apply to each element of the vector $\mathbf{x}_t$ independently; different elements of $x_t$ may use different function), $\alpha$ is a dissipation rate, $\gamma$ is a momentum parameter and $\beta$ is a parameter defining a relative contribution of the system energy function to the update.

According to another aspect of the present disclosure there is provided a computer-implemented method comprising: receiving a plural number of candidate parameter value sets in an order specified in an ordered sequence of candidate parameter value sets, each candidate parameter value set comprising a respective one or more candidate parameter values for one or more parameters of an optimisation algorithm, each of the candidate parameter values being a value of a respective one of the one or more parameters, wherein said number of candidate parameter value sets is based on a processing budget; for each respective parameter value set in the sequence: applying the optimisation algorithm, with the one or more parameters set to the respective one or more candidate parameter values, to a plurality of initial states of a model representing a system in order to generate a corresponding plurality of candidate updated states of the model, and evaluating each of the candidate updated states according to an optimality metric to generate an optimality score; selecting, as an estimated optimal state of the model, the candidate updated state that corresponds to the highest optimality score; and outputting the selected estimated optimal state of the model to one of: a user interface, computer storage, or a destination application.

In embodiments this method may further comprise steps in accordance with any method described here.

A further aspect disclosed herein provides a computer system comprising: memory and one or more processors, or optical hardware configured to implement any method disclosed herein.

A further aspect disclosed herein provides computer program for programming a computer system to carry out the steps of any method or functionality disclosed herein.

Other variants or use cases may become apparent to a person skilled in the art once given the disclosure herein. The scope of the present disclosure is not limited by the above-described embodiments, but only by the accompanying claims.

**Claims**

1. A computer-implemented method comprising:

receiving a plural number of candidate parameter value sets of an ordered sequence of candidate parameter value sets in an order specified in the ordered sequence, each of said plural number of candidate parameter value sets comprising a respective candidate parameter value for at least one parameter of an optimisation algorithm, wherein the number of received candidate parameter value sets is based on a processing budget; for each candidate parameter value set in the sequence:

- applying the optimisation algorithm, with the at least one parameter of the optimisation algorithm set to the respective candidate parameter value, to a plurality of initial states of a model representing a system in order to generate a corresponding plurality of candidate updated states of the model, and
- evaluating the plurality of candidate updated states according to an optimality metric, the evaluating comprising evaluating each of the candidate updated states according to the optimality metric to generate a corresponding optimality score for the candidate updated state, such that different ones of the candidate updated states have different optimality scores;

selecting, as an estimated optimal state of the model, the candidate updated state that has the highest corresponding optimality score; and
outputting the selected estimated optimal state of the model to one of: a user interface, computer storage, or a destination application.

2. The method of claim 1, wherein the received candidate parameter value sets are selected as a subset of the first k parameter value sets of a sorted list of parameter value sets, where k is a number selected based on the processing budget.

3. The method of claim 2, wherein the sorted list of parameter value sets is sorted according to a performance metric of the optimisation algorithm, wherein for each respective one of the parameter sets in the sorted list the performance metric measures an expected performance of the optimisation algorithm with the parameters of the optimisation algorithm set to the respective parameter value set.

4. The method of any preceding claim, wherein the optimisation algorithm is an iterative optimisation algorithm comprising an update rule to generate a state for a next iteration when applied to a state for a current iteration, wherein for each parameter value set in the sequence said applying of the optimisation algorithm comprises iteratively performing an update by applying the update rule to the initial state over a predefined full depth in order to obtain the candidate updated states, wherein the full depth is the number of iterations in which the update rule is applied.

5. The method of claim 4 when dependent on claim 3, wherein the step of determining the sorted list of parameter value sets comprises:

sampling a plurality of combinations of parameter values from within a predetermined range for each parameter; for each combination:

- applying a modified optimisation algorithm to an exploratory set of initial states of the system to generate a set of exploratory updated states,
- evaluating each of the exploratory updated states according to the optimality metric to generate a corresponding optimality score, and
- determining a performance metric comprising a representative measure of the optimality score aggregated over the exploratory updated states; and

ordering the combinations according to the computed performance metric;

wherein the modified optimisation algorithm comprises iteratively applying the update rule over a partial depth, the partial depth being the number of iterations in which the update rule is applied by the modified optimisation algorithm, wherein the partial depth is less than the full depth and/or the exploratory set of initial states is smaller than the plurality of initial states.

6. The method of claim 5, wherein the model comprises a matrix, and wherein the range for each parameter is determined by performing linear stability analysis on a selected eigenvalue of the matrix.

7. The method of claim 6, wherein the eigenvalue is selected by computing a predetermined number of the largest eigenvalues and computing the optimality score for the corresponding eigenvectors, and selecting the eigenvalue corresponding to the eigenvector yielding the highest optimality score from the computed optimality scores.

8. The method of any preceding claim, wherein the processing budget comprises a constraint on one or more of: processing time, memory consumed, a number of processing cycles performed, or processing energy consumption; the number of received candidate parameter value sets being the number that can be processed within the constraint of the processing budget.

9. The method of any preceding claim, wherein the system is represented by a graph defining interactions between pairs of variables of the system, and each state of the system is an assignment of values to the variables of the system.

10. The method of any preceding claim, wherein the optimality score is computed by evaluating an energy function of the model, the energy function representing the total energy of a physical system represented by the model.

11. The method of any preceding claim, wherein the optimisation algorithm is a gradient descent algorithm with momentum.

12. The method of any preceding claim, wherein the system represented by the model is one of a computing system, electronic system, electrical or electromagnetic system, mechanical system, chemical system, or an application of a treatment to a living being, and wherein the method further comprises implementing the estimated optimal state in the system.

13. A method of optimising the state of a system representable by a matrix G, the method comprising:
receiving an input vector $x_o$ representing the state of the system at an initial timestep t=0 and iteratively updating the vector at each consecutive timestep t according to an update formula of the following form:

$$x_{t+1} = x_t - \Delta t \cdot \left[ \alpha \cdot H_1(x_t) - \beta \cdot H_2\big(G \cdot H_3(x_t)\big) \right] - \gamma(x_t - x_{t-1}),$$

wherein $H_1, H_2, H_3$ are linear or nonlinear functions (the functions apply to each element of the vector $x_t$ independently; different elements of $x_t$ may use different function), $\alpha$ is a dissipation rate, $\gamma$ is a momentum parameter and $\beta$ is a parameter defining a relative contribution of the system energy function to the update.

14. A computer system comprising:

memory and one or more processors, or
optical hardware

configured to implement the method of any preceding claim.

15. A computer program for programming a computer system to carry out the steps of any of claims 1-13.

# FIG. 1

FIG. 2

Receive ordered sequence of parameter value sets — S200

Assign first set of values as parameters of optimisation algorithm — S202

Execute optimisation algorithm on set of initial states — S204

Output candidate states — S206

Assign next set of values as parameters of optimisation algorithm — S210

Compute optimality score for each candidate state — S212

All parameters processed?

No

Yes

Select highest-score candidate as estimated solution — S214

FIG. 3

FIG. 4A

FIG. 4B

FIG. 5A

Parameter Control — 500

Spin Generator — 502

Optical Optimisation Algorithm updater — 504

Optical → Analog — 506

Analog → Digital & Solution sampling — 508

Solution — 510

Optical
Electrical (analog)
Electrical (digital)

FIG. 5B

508 — Analog → Digital & Solution sampling

Sample solution periodically

500 — Parameter Control

506 — Optical → Analog

504 — Optical Momentum

512 — Spin-to-Spin Interactions

516 — Optical Annealer

502 — Spin Generation

514

Optical
Electrical (analog)
Electrical (digital)

FIG. 6

EP 4 254 226 A1

Europäisches
Patentamt

European
Patent Office

Office européen
des brevets

# EUROPEAN SEARCH REPORT

Application Number

EP 22 16 4734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 869 362 A1 (FUJITSU LTD [JP]) 25 August 2021 (2021-08-25) * paragraph [0010] - paragraph [0027]; figure 1 * | 1-15 | INV. G06F17/11 G06N10/00 |
| A | WO 2018/222205 A1 (GOOGLE LLC [US]) 6 December 2018 (2018-12-06) * paragraph [0413] - paragraph [0430]; figure 13 * | 1-15 | |
| A | CHARLES ROQUES-CARMES ET AL: "Photonic Recurrent Ising Sampler", ARXIV.ORG, CORNELL UNIVERSITY LIBRARY, 201 OLIN LIBRARY CORNELL UNIVERSITY ITHACA, NY 14853, 7 November 2018 (2018-11-07), XP080935158, * sections III and IV. * | 1-15 | |
| A | US 2019/095811 A1 (ANTONIO MEZZACAPO [US] ET AL) 28 March 2019 (2019-03-28) * paragraph [0041] - paragraph [0092] * | 1-15 | TECHNICAL FIELDS SEARCHED (IPC) G06F G06N |

The present search report has been drawn up for all claims

| Place of search | Date of completion of the search | Examiner |
|---|---|---|
| Berlin | 28 October 2022 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 254 226 A1

## ANNEX TO THE EUROPEAN SEARCH REPORT
## ON EUROPEAN PATENT APPLICATION NO.

EP 22 16 4734

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | | Publication date | Patent family member(s) | | Publication date |
|---|---|---|---|---|---|
| EP 3869362 | A1 | 25-08-2021 | CN | 113342403 A | 03-09-2021 |
| | | | EP | 3869362 A1 | 25-08-2021 |
| | | | JP | 2021131611 A | 09-09-2021 |
| | | | US | 2021256179 A1 | 19-08-2021 |
| WO 2018222205 | A1 | 06-12-2018 | US | 2020097853 A1 | 26-03-2020 |
| | | | WO | 2018222205 A1 | 06-12-2018 |
| US 2019095811 | A1 | 28-03-2019 | CN | 111095307 A | 01-05-2020 |
| | | | EP | 3685322 A1 | 29-07-2020 |
| | | | JP | 7149504 B2 | 07-10-2022 |
| | | | JP | 2020534607 A | 26-11-2020 |
| | | | US | 2019095811 A1 | 28-03-2019 |
| | | | US | 2019251466 A1 | 15-08-2019 |
| | | | WO | 2019057317 A1 | 28-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21155439
- EP 21155447
- EP 21155428